(19) Europäisches Patentamt
European Patent Office
Office européen des brevets

(11) **EP 3 657 354 A1**

(12) **EUROPEAN PATENT APPLICATION**

(43) Date of publication:
**27.05.2020 Bulletin 2020/22**

(51) Int Cl.:
***G06F 16/35*** (2019.01)

(21) Application number: **18207795.8**

(22) Date of filing: **22.11.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Healthcare GmbH**
**91052 Erlangen (DE)**

(72) Inventors:
• **YEREBAKAN, Halid Ziya**
  **Malvern, PA Pennsylvania 19355 (US)**
• **SHINAGAWA, Yoshihisa**
  **Downingtown, PA Pennsylvania 19335 (US)**

(74) Representative: **EIP**
**EIP Europe LLP**
**Fairfax House**
**15 Fulwood Place**
**London WC1V 6HU (GB)**

(54) **SUPERVISED FEATURES FOR TEXT CLASSIFICATION**

(57) A method of determining a supervised feature, for use in text classification, for each word of a vocabulary, is disclosed. The vocabulary comprises a plurality of words each associated with a word embedding comprising a vector representing the word in a multidimensional space. The method comprises obtaining training data comprising one or more input words, one or more word embeddings each associated with a respective one of the input words, and one or more ground truth labels, each associated with a respective one of the input words, and each indicating an association of the respective input word with a given class. The method comprises training, based on the training data, a classifier model thereby to generate a classifier hyperplane in the multidimensional space, and determining, based on the classifier hyperplane, for each word of the vocabulary, a supervised feature for use in text classification. An apparatus is also disclosed.

FIG 1

obtaining training data comprising input words, word embeddings and ground truth labels — 102

training a classifier model to generate a classifier hyperplane based on the training data — 104

determining, based on the classifier hyperplane, for each word of the vocabulary, a supervised feature for use in text classification — 106

**Description**

Technical Field

The present invention relates to supervised features for use in text classification.

Background

With the volume of textual information generated and stored ever increasing, there is a need for effective and efficient methods of retrieving information relevant to a specific task. For example, in the field of biomedical sciences, there is often a need to retrieve information from textual documents, such as medical text reports, that contain or relate to a specific topic. For example, medical doctors often require retrieval of medical reports of findings related to lung diseases.

It is known to retrieve documents relevant to a given topic from a database based on keyword searching, i.e. retrieving as relevant one or more documents that contain specified one or more input keywords. For example, the topic "lung diseases" may be defined by one or more keywords related to lung diseases. A document is classified as relevant or not to the topic based on the inclusion of the one or more keywords in the document. The choice of keywords for the topic or classifier significantly affects the classification accuracy. Creating such a list of keywords manually is time consuming. Moreover, it is difficult to list all the keywords exhaustively that will be relevant to a given topic. Thus, coverage of the keywords is limited, and classification accuracy may be sub-optimal.

Known topic models, such as latent semantic analysis and latent Dirichlet allocation, construct topics in an unsupervised way from a given corpora of text by assuming multinomial word distributions across all of the text. These models produce semantically coherent word groups and capture polysemy of words across different topics. However, the topics produced by such models are relatively inflexible, and may not be of sufficient relevance to a desired topic. For example, the model may group medical words in one topic but it may be desired that a topic for cardiovascular diseases is produced. Such control is not provided for in these models. The granularity of the topics in the model could be increased, but this both reduces the quality of the topics (accuracy with which a given text can be classified by a topic) and necessarily increases the total number of topics, which is inefficient.

Further, the topics or classifiers generated by the known topic models are tied to the corpora on which they are based. The data required to train the models to generate accurate topics may therefore be necessarily large (which may be inefficient). Moreover, such models and the topics or classifiers produced thereby may be relatively inflexible with respect to their use in more general applications, or across different applications.

It is therefore desirable to provide for accurate and/or flexible text classifiers in an efficient and/or flexible manner.

Summary

According to a first aspect of the present invention, there is provided a method of determining a supervised feature, for use in text classification, for each word of a vocabulary, the vocabulary comprising a plurality of words each associated with a word embedding comprising a vector representing the word in a multidimensional space, the method comprising: obtaining training data, the training data comprising: one or more input words; one or more word embeddings each associated with a respective one of the input words, each word embedding comprising a vector representing the respective one of the input words in the multidimensional space; and one or more ground truth labels, each associated with a respective one of the input words, and each indicating an association of the respective input word with a given class; wherein the method further comprises: training, based on the training data, a classifier model thereby to generate a classifier hyperplane in the multidimensional space; and determining, based on the classifier hyperplane, for each word of the vocabulary, a supervised feature for use in text classification.

Optionally, the supervised feature for each word of the vocabulary represents a distance, or a function of the distance, between the vector representing the word and the classifier hyperplane.

Optionally, the method comprises: determining, based on the supervised feature, one or more words for the given class.

Optionally, the method comprises: obtaining a said ground truth label, and a said word embedding, for each of the determined one or more words for the given class; updating the training data, based on the one or more determined words, the obtained ground truth label for each of the one or more determined words, and the obtained word embedding for each of the one or more determined words, to include the one or more determined words as input words; retraining, based on the updated training data, the classifier model to produce an updated classifier hyperplane in the multidimensional space; determining, for each word of the vocabulary, an updated supervised feature representing the distance, or function of distance, of the vector of the word embedding of the word from the updated classifier hyperplane; and determining, based on the updated supervised feature, one or more further words for the given class.

Optionally, the training data is updated, and the classifier model is retrained, each time a said ground truth label and word embedding is obtained for one of the one or more determined words.

Optionally, the method comprises determining as said determined words those words of the vocabulary whose vector is in a positive subspace of the multidimensional space as defined by the hyperplane and has a distance, or a function of distance, from the hyperplane more than a threshold value.

Optionally, the method comprises displaying the one or more determined words to a user via a graphical user interface.

Optionally, the method comprises: performing, using at least the one or more determined words, a keyword search on a corpus of documents thereby to obtain documents relevant to the given class.

Optionally, the method further comprises: applying a computer implemented text analysis process to natural language text to determine a classification of the text, the natural language text comprising one or more words present in the vocabulary; wherein the computer implemented text analysis process comprises: obtaining, for each of the one or more words of the natural language text, the supervised feature for the word; determining, for each of the one or more words of the natural language text, a modified vector based on the respective obtained supervised feature for the word; and determining, based on the determined modified vectors, and using a text classification model, a classification of the text.

Optionally, the text classification model is a classification model having been trained based on second training data, the second training data comprising sets of one or more said modified vectors of words of respective training texts, each set being annotated with a second ground truth label corresponding to a classification of the training text.

Optionally, the classifier model is a logistic regression classifier model.

Optionally, the method comprises: obtaining a first input word and a said word embedding associated with the first word; applying a cosine similarity operation on the vector of the word embedding of the first input word with respect to the vectors of each of the word embeddings of the words of the vocabulary thereby to determine a plurality of second input words; and obtaining a said ground truth label and said word embedding for one or more of the second input words, thereby to obtain the training data.

Optionally, the method comprises normalising the vector of the word embedding of each word of the vocabulary prior to training the classifier model.

Optionally, obtaining a said ground truth label comprises obtaining the ground truth label via a or the graphical user interface.

According to a second aspect of the present invention, there is provided an apparatus comprising a processor and a memory, the processor being configured to perform the method according to the first aspect.

According to a third aspect of the present invention, there is provided a computer readable medium having instructions stored thereon which, hen executed by a computer, cause the computer to perform the method according to the first aspect.

Brief Description of the Drawings

Figure 1 is a flow diagram illustrating schematically a method according to an example;

Figure 2 is a functional block diagram illustrating schematically a method according to an example;

Figure 3 is a functional block diagram illustrating schematically a method according to an example;

Figures 4a to 4c are diagrams illustrating schematically a user interface and its functioning according to an example;

Figure 5 is a flow diagram illustrating schematically a method according to an example;

Figure 6 is a graph showing a plot of classification accuracy against number of epochs of a neural network-based text classification model;

Figure 7 is a diagram illustrating schematically an architecture of a neural network according to an example; and

Figure 8 is diagram illustrating schematically an apparatus according to an example.

Detailed Description

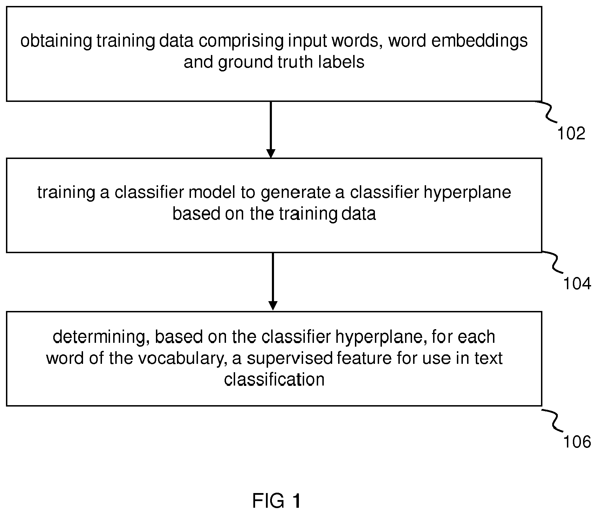

Referring to Figure 1, there is illustrated a method of determining a supervised feature, for use in text classification, for each word of a vocabulary. In some examples, the supervised feature may be an interactively supervised feature, in that it may be the product of interactive supervision of the training of a classifier model, as described in more detail below.

The vocabulary comprises a plurality of words each associated with a word embedding comprising a vector representing the word in a multidimensional space. For example, all words of a corpus of text may be used to build the vocabulary. In practice, the corpus may be sufficiently large such that substantially all words, for example all words of a given language, may be included in the vocabulary.

Word embeddings may be mappings of individual words or phrases of the vocabulary onto real-valued vectors representative thereof in a multidimensional vector space. Each vector may be a dense distributed representation of the word in the vector space. Word-embeddings may be learned/generated to provide that words or phrases that have a similar meaning have a similar representation in vector space.

Word embeddings may be learned using machine learning techniques. Word embeddings may be learned/generated for words of the vocabulary of a corpus of text. Word embeddings may be learned/generated using a training process applied on the corpus of text. The training process may be implemented by a deep learning network, for example based on a neural network. For example, the training may be implemented using a Recurrent Neural Network (RNN) architecture, in which an internal memory may be used to process arbitrary sequences of inputs. For example, the training may be implemented using a Long Short-Term Memory (LSTM) based Recurrent Neural Network (RNN) architecture, for example comprising one or more LSTM cells for remembering values over arbitrary time intervals, and/or for example comprising gated recurrent units (GRU). The training may be implemented using a convolutional neural network (CNN). Other suitable neural networks may be used. The word embeddings may be learned using various techniques, for example Word2vec or Glove or similar.

Various models may be employed for learning/generating word embeddings. For example, word embeddings may be learned using a skip-gram model implemented on a neural network. The skip-gram model may learn word embeddings for words given the local usage context of the words, where the context is defined by a window of neighbouring words. This window is a configurable parameter of the model. The skip-gram model may learn the word embeddings by predicting words that surround a given word. For example, all words of a corpus of text may be used to build the vocabulary. The word embeddings may initially map each word onto a vector of a given dimensionality that is populated with randomly generated numbers. The skip-gram model may take a word of the vocabulary and using the word embedding associated with that word attempt to predict words that surround that word in a given window. The skip-gram model may then compare the predictions with words that actually surround that word in the corpus of text and adjust word embeddings accordingly on the basis thereof. This process may be recursively applied until accurate word embeddings are generated. Other suitable models for learning word embeddings may be applied. The vector mapped by the word embeddings may be dense, i.e. of relatively low dimension, for example as compared to sparse word representations, allowing for efficient implementation.

In some examples, the word embeddings of the vocabulary may be pre-trained. For example, the vocabulary and the word-embeddings thereof may be obtained from a database.

Referring again to Figure 1, in broad overview, the method comprises the following steps 102 to 106.

In step 102, the method comprises obtaining training data. The training data comprises the one or more input words. For example, the input word may be "cardiac". The training data also comprises one or more word embeddings each associated with a respective one of the input words. Each word embedding comprises a vector representing the respective one of the input words in the multidimensional space. The training data also comprises one or more ground truth labels each associated with a respective one of the input words, and each indicating an association of the respective input word with the given class. For example, a ground truth label may identify whether the word is classified as positive or negative with respect to a given desired class or topic. For example, the ground truth labels may be obtained from a user via a user interface as described in more detail below. For example, for the given class "heart anatomy", the word "cardiac" may be associated, for example by a user, with a ground truth label identifying that the word as positive with respect to the class.

In step 104, the method comprises training, based on the training data, a classifier model to generate a classifier hyperplane in the multidimensional space. For example, the classifier model may be a logistic regression classifier model. The training may comprise stochastic gradient decent as a method of generating (or optimising) the classifier hyperplane based on the training data.

A hyperplane is a subspace of a multidimensional space having a dimension one less than that of the multidimensional space. A hyperplane is defined by a vector with a dimension one more than that of the multidimensional space. The vector defining the hyperplane is orthogonal to the hyperplane, i.e. normal to the hyperplane surface. The vector defining the hyperplane comprises dimension defining the position of the hyperplane in multidimensional space.

For example, in a three-dimensional space, a hyperplane may define a two dimensional surface and be represented with a four-dimensional vector (three dimensions for defining the orientation of the surface and one dimension for defining the location of the surface). In four dimensional space, a hyperplane may define a three dimensional volume and may be represented by a five dimensional vector, and so on. The multidimensional vector space may have many, for example 300 dimensions, and hence the generated hyperplane may be defined by a 301 dimensional vector, for example. The classifier hyperplane, once trained, may define a positive subspace of the multidimensional space in which are located vectors of words predicted by the classifier model to be positive with respect to the classifier, and a negative subspace in which are located vectors of words predicted by the classifier model to be negative with respect to the classifier.

In some examples, the training may comprise supervised machine learning. For example, the vectors of each of the input words may represent an input object, and the corresponding ground-truth annotation a supervisory signal, for the training process. For example, the training may comprise analysing the training data to produce an inferred classifier model, which may then be used for determining words of the given class. For example, as mentioned, the classifier model may be a logistic regression classifier model. For example, the classifier model may use the vectors and the associated positive or negative ground truth labels to define the classifier hyperplane in the multidimensional space.

For example, training the classifier model to generate the classifier hyperplane may comprise optimising a classifier function based on the training data. For example, training the classifier model may comprise optimising a logistic regression classifier function. In some examples, training the classifier model may comprise projecting the vectors of the words of the training data onto a vector defining the classifier hyperplane.

For example, let w be the vector defining the classifier hyperplane (hereinafter the classifier vector w), and v be the word vector for a given word. Training the logistic regression classifier model may comprise optimising, based on the training data, w and b in the equation

$$P = 1/(1+e^{-(w'v+b)}) \qquad\qquad (1)$$

where P is the probability (between 0 and 1) of the word associated with word vector v being positive with respect to the classifier, w'v is the dot product of the vector defining the classifier hyperplane (w) with the vector for a given word (v) (i.e. the projection of v onto w), and b is a parameter for optimisation relating to the location of the hyperplane. Specifically, optimising w and b may comprise optimising w and b in the equation (1) so that for each word of the training data assigned a positive ground truth label, the equation returns a P of as close to +1 as possible, and for each word of the training data assigned a negative ground truth label, the equation returns a P of as close to 0 as possible.

Once the classifier hyperplane, or equally the classifier vector w representing the classifier hyperplane, has been trained or optimised, the classifier model may be used to determine whether a word has a high probability of being positively associated with the class defining the hyperplane. For example, a word vector v for a given word may be input into the equation (1) (having trained parameters w and b) to return a probability P. If the probability is close to 1, the word of the given vector is likely to have a positive association with the class, whereas if the probability is close to 0, the word of the given vector is likely to have a negative association with the given class. If the probability is close to 0.5, then it is equally likely that the word of the given vector has a positive or negative association with the given class. In terms of the multidimensional space, words having vectors located in the positive subspace defined by the hyperplane and with large distances from the (trained) hyperplane, may be predicted by the model to be words with a high probability of having a meaning or context associated, i.e. positively associated, with the class as defined by the hyperplane. For example, the word "cardiovascular" may have a vector that has a large (positive) distance from the hyperplane trained based on the word "cardiac" being annotated as positive with respect to the given class "heart anatomy" and based on the word "love" being annotated as negative with respect to the given class "heart anatomy", whereas the word "soul" may have a vector with a small (positive) distance from the hyperplane meaning that it is uncertain as to whether the word "soul" as a positive association with the class, for example. The training may be implemented using a deep learning network, for example based on a neural network, for example any one or more of the example neural networks described above.

In step 106, the method comprises determining, based on the classifier hyperplane, for each word of the vocabulary, a supervised feature for use in text classification.

In some examples, the supervised feature for each word of the vocabulary may represent a distance of the vector of that word from the classifier hyperplane. For example, the supervised feature for each word of the vocabulary may represent a Euclidian distance of the vector from the hyperplane. For example, the supervised feature of each word may be determined by calculating a distance of the vector of that word from the generated hyperplane.

In some examples, the supervised feature for each word may represent a function of the distance of the vector of that word from the classifier hyperplane. For example, the supervised feature may comprise the probability P resulting from equation (1) using the optimised w and b values and using the word vector v for the word as input. In these examples, determining the supervised feature for a given word may comprise inputting the word vector v for a given word into a trained classifier function, for example that of equation (1). As mentioned, in terms of the multidimensional space, the probability P of equation (1) represents a function of the distance for a given word vector from the classifier hyperplane.

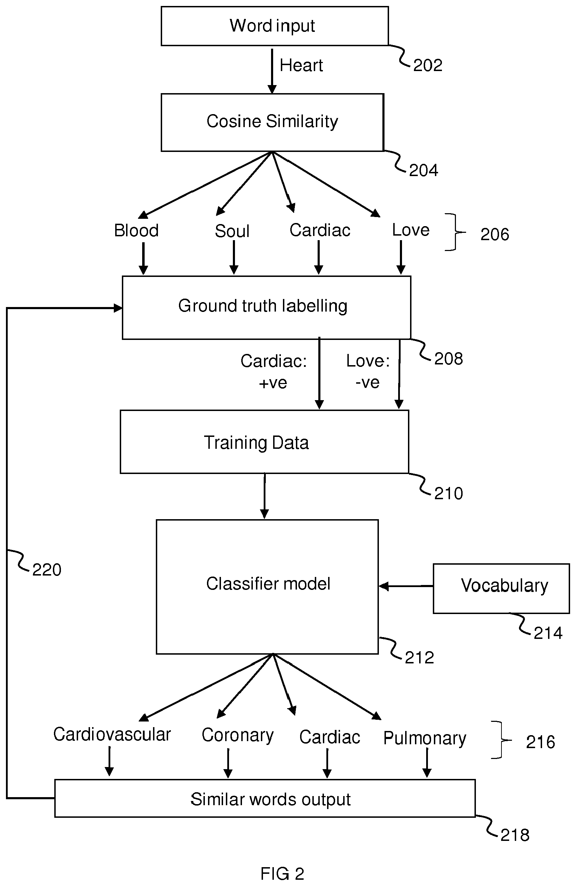

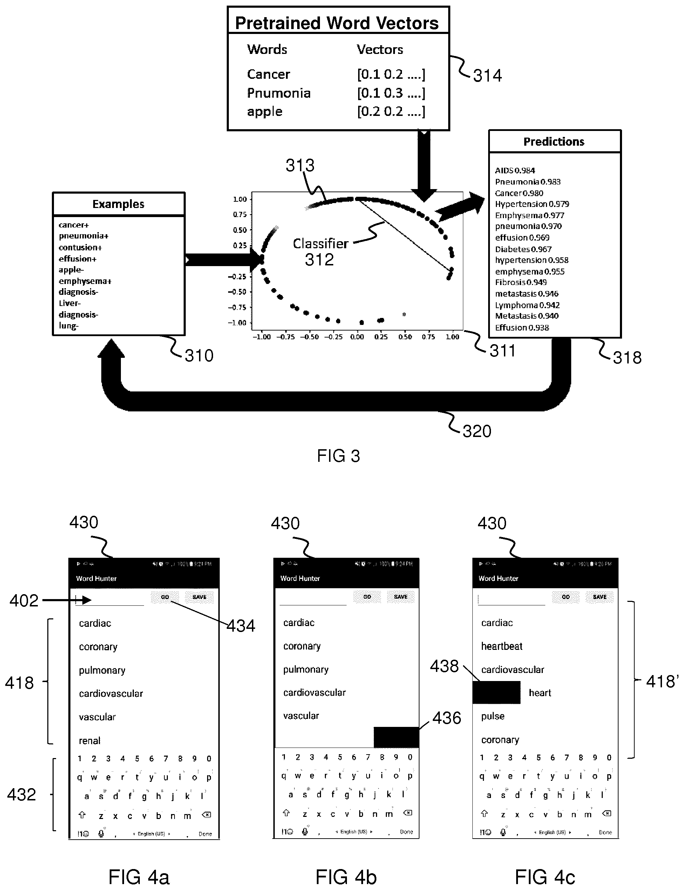

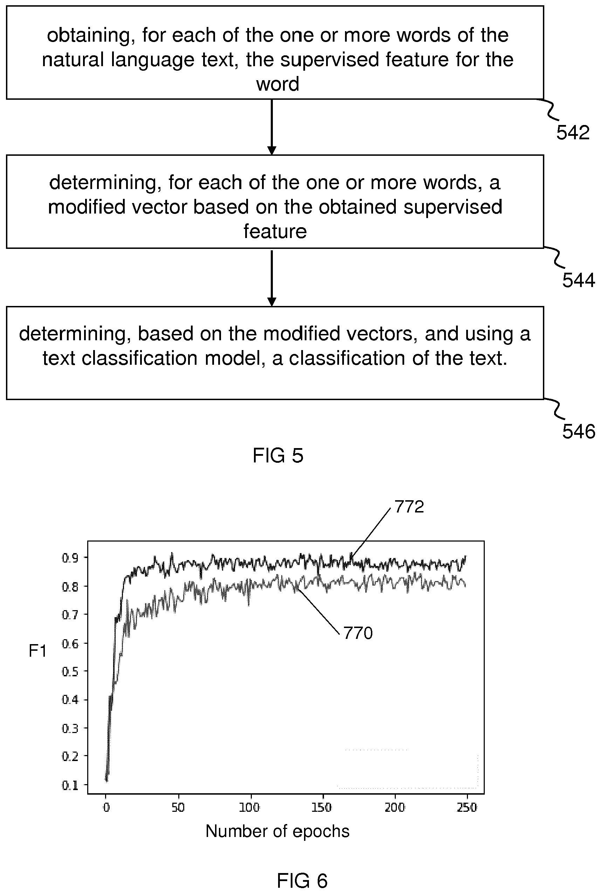

As described in more detail below, the supervised features of the words of the vocabulary, having been determined based on the classifier hyperplane generated for example as described above, may be used in various text classification applications, to provide for accurate and/or flexible text classification in an efficient and/or flexible manner. A first example is the focus of Figures 2 and 3, and a second example is the focus of Figures 5 to 7, but it will be appreciated that any feature described with reference to one example may in some examples be used in combination with the features of the other example.

In some examples, as mentioned, the supervised feature for each word of the vocabulary represents a distance, or a function of the distance, of the vector of that word from the classifier hyperplane. In these examples, the method may comprise determining, based on the supervised features, one or more words for the given class. For example, a word whose vector is a large distance from the classifier hyperplane and on the positive side of the hyperplane (i.e. a large positive distance), or has a large value of P from equation (1), may be determined as belonging to the given class, for example as a word similar or related to the input word. For example, the vector of the word "cardiovascular" may have a large distance from the classifier hyperplane trained as described in the above example, and hence may be determined as a word of the given class "heart anatomy".

Accordingly, one or more words of a given or desired class (i.e. related to a given topic) are generated based on the result of training the classifier model with input words and ground truth labels indicating the association of the input word to that class. The determined words may be used, for example along with the input words, to define a topic or class for keyword searching of documents relevant to that class. Keywords for the given class may therefore be expanded. This may help improve accuracy of association of given documents to the class.

Further, the keywords of the class may be expanded in an efficient manner. For example, the determination of the one or more keywords may be based on only one or a few training iterations of the text classifier model (explained in more detail below), which may be computationally inexpensive as compared to, for example, training known topic models. Further, the words of the class are determined based on linear calculations in vector space, which may be relatively computationally efficient as compared to for example the statistical analysis of known topic models.

In addition, as described in more detail below with reference for example to Figures 5 to 7, the generated classifier hyperplane and/or supervised features for words of the vocabulary, determined based on the classifier hyperplane, can be used in further text classifier models in a flexible way to provide for efficient and accurate text classification. For example, in some examples, the supervised feature for each word of the vocabulary may be concatenated with the vector representing the word to generate a modified vector, and this modified vector may be used by a further text classification model.

As mentioned above, in some examples, the method may be applied iteratively.

More specifically, in some examples, the method may comprise obtaining a said ground truth label, and a said word embedding, for each of the determined one or more words for the given class. For example, the determined one or more words may be output to a user interface and a user may assign a ground truth label indicating the association of one or more of the determined words to the given class. For example, the determined word "cardiovascular" may be annotated as being positive with respect to the given class "heart anatomy".

The method may then comprise updating the training data, based on the one or more determined words, the obtained ground truth label for each of the one or more determined words, and the obtained word embedding for each of the one or more determined words, to include the one or more determined words as input words. For example, the updated training data may now comprise the vector of the input word "love" annotated as negatively associated, and the vectors of the input words "cardiac" and "cardiovascular" as positively associated with the given class "heart anatomy".

The method may then comprise retraining, based on the updated training data, the classifier model to produce an updated classifier hyperplane in the multidimensional space. For example, the classifier hyperplane may move in the vector space to take account of the new training data.

The method may then comprise determining, for each word of the vocabulary, an updated supervised feature representing the distance, or a function of the distance, of the vector of the word embedding of the word from the updated classifier hyperplane; and determining, based on the updated supervised features, one or more further words of the given class. For example, based on the updated hyperplane, the vector of the word "vessel" may now have a relatively large (positive) distance from the hyperplane (or a relatively large value of P from equation (1)), and hence may be determined as a word of the class "heart anatomy".

Applying the method iteratively, i.e. repeating the process as described above, may allow for the keywords defining the class or topic to be further expanded, and for the class to topic to be further refined, thereby further increasing the accuracy of the classifier, for example for use in classifying documents.

In some examples, the training data may be updated, and the classifier model may be retrained, for example as described above, each time a said ground truth label and word embedding is obtained for one of the one or more determined words. For example, the ground truth labels for the determined words may be obtained one-by-one, and the model may be retrained each time a ground truth label is obtained. For example, this may provide that further determined words are generated each time a ground truth label is obtained. This may allow for efficient training of the classifier model towards the given desired class, and hence for efficient generation of the accurate class or topic as defined by the determined words.

In some examples, the classifier model may be retrained using stochastic gradient decent each time the training data is updated. For example, each time a new ground truth label is obtained, the classifier model may be retrained using stochastic gradient decent. This may allow for an efficient iterative optimisation of the classifier hyperplane towards the desired class, and hence for the determination of an accurate extended set of words for defining the class.

In some examples, the method may comprise determining as said determined words those words of the vocabulary whose vector has a (positive) distance (or function of distance) more than a threshold value from the classifier hyperplane. For example, the method may comprise determining as said determined words those words of the vocabulary whose probability P in (trained) equation (1) is more than a threshold value. For example, only those words whose vectors have a distance more than a predetermined distance from the classifier hyperplane may be determined as determined words. For example, only those words whose vectors have a probability P from (trained) equation (1) more than a threshold value may be determined as determined words.

In some examples, the method may comprise ranking the words of the vocabulary in order of distance (or function of distance) from the classifier hyperplane (i.e. those with a larger distance or larger value of P have a rank closer to a top rank) and determining as said determined words those words above a predefined rank. For example, the distance of the vector, of each word of the vocabulary, from the classifier hyperplane may be calculated (as represented by the supervised feature), and ranked in order of decreasing (positive) distance from the hyperplane. In some examples, only the top ten (or top any predefined integer number) are determined as said determined words. In some examples, only the determined words are presented to the user for ground truth label annotation. This may help ensure that only those words most likely to be relevant to defining the desired class are determined, for example for use in keyword searching.

In some examples, the one or more input words of the training data may be obtained via a user input from a user. However, in other examples, the training data may be obtained in different ways. For example, the method may comprise obtaining a first input word and a said word embedding associated with the first word; applying a cosine similarity operation on the vector of the word embedding of the first input word with respect to the vectors of each of the word embeddings of the words of the vocabulary thereby to determine a plurality of second input words; and obtaining a said ground truth label and said word embedding for one or more of the second input words, thereby to obtain the training data. For example, for the given class "heart anatomy", a user may input the first input word "heart" (or the word may be otherwise obtained). A cosine similarity operation may then be applied to the vector of the first input word (e.g. "heart"). For example, the cosine similarity operation may calculate the cosine of the angle between the vector of the first input word (e.g. "heart") and the vector for each other word in the vocabulary. For similar words, the cosine of the angle between the vectors may be large (i.e. close to 1). For example, for the word "heart", the cosine similarity operation may return the words "blood", "soul", "cardiac" and "love" as similar words. The cosine similarity operation may be implemented, for example, using a Python Gensim package, for example using the command line "embeddings.most_similar('word')", where 'word' is the first input word. The user may assign a ground truth label to one or more of these words. For example, the user may assign a ground truth label to the word "cardiac" indicating it (and its vector) as positive with respect to the given class "heart anatomy". Therefore, the word "heart", and its vector and ground truth label may be obtained as the training data to train the classifier model as described above. This may provide, based on a single word input or otherwise specified, for a plurality of words to be generated, on the basis of which the classifier may be subsequently trained. This may allow for an efficient expansion of the words by which the class or topic is defined, thereby allowing for an efficient way to define an accurate class or topic.

In some examples, the method may comprise normalising the vector of the word embedding of each word of the vocabulary. For example, this normalisation may be applied prior to training the classifier model, for example prior to performing the cosine similarity operation. For example, normalising in this context may comprise ensuring that every word of the vocabulary has a vector whose $l_2$ norm is 1, that is, each vector is a unit vector. This may help ensure that words having vectors with a high cosine similarity are more likely to be words with a similar meaning or context.. Normalising the word vectors, e.g. prior to training the classifier model, may also help in training the classifier model (and hence in producing supervised features) in that it may help ensure that a better linear separability from the classifier hyperplane is obtained for positive labelled words, for example as compared to if the words vectors were not normalised.

In some examples, obtaining a said ground truth label may comprises obtaining the ground truth label via a graphical user interface. In some examples, the method comprises displaying the one or more determined words to a user via a graphical user interface. This is described in more detail below with reference to Figures 4a to 4b. This may facilitate the (iterative) training of the classifier model, and hence provide for more efficient class definition, for example.

In some examples, the method may comprise performing, using at least the one or more determined words, a keyword search on a corpus of documents thereby to obtain documents relevant to the given class. For example, the determined words for the given class "heart anatomy" may be "cardiac", "cardiovascular" and "vessel". The keyword search based on the determined words may return documents containing these words, which search may be more accurate to the given desired class or topic, as defined by the determined words, than for example based on "heart anatomy" alone. In some examples, the keyword search may be based on the determined words and, for example, the first input word (in this example "heart").

In some examples, as described in more detail below with reference to Figures 5 to 7, the method may comprise applying a computer implemented text analysis process to natural language text to determine a classification of the text. For example, the natural language text may comprise a medical text report or a medical record, or a part thereof. The natural language text comprises one or more words present in the vocabulary. The computer implemented text analysis process may comprise: obtaining, for each of the one or more words of the natural language text, the supervised feature for the word; and determining, based on the determined supervised feature, and using a text classification model, a classification of the text. For example, the supervised features may be those determined as described above. In some examples, the method may comprise determining a modified vector for each word of the vocabulary based on the respective obtained supervised features for each word, and using the modified vector in the text classification model to determine the classification of the text. For example, the modified vector may comprise a concatenation of the vector for the given word with the supervised feature. For example, the modified vector may comprise a concatenation of the vector of each word with the distance of that word from the (trained) hyperplane, or for example with the probability P of that word from derived from (trained) equation (1). For example, the text classification model may be a classification model having been trained based on second training data, the second training data comprising sets of one or more said modified vectors of words of respective training texts, each set being annotated with a second ground truth label corresponding to a classification of the training text. The modified vectors may in essence "activate" the word to the given class, and hence may improve the accuracy and efficiency of the classification of the text.

Referring now to Figure 2, there is a diagram illustrating an example implementation of the method described with reference to Figure 1, and the supervised features generated thereby. In this example, as above, the given class is "heart anatomy", and a user is seeking an expansive list of keywords to suitably define the class "heart anatomy".

In block 202, a first word may be input or otherwise obtained. For example, a user may input the word "heart" into a graphical user interface of a computing device. In block 204, a cosine similarity operation is applied to the input word "heart", that is the cosine between the vector of each word in the vocabulary and the vector for the word "heart" is calculated, and those words with the highest scores are output. In this example, four output words 206 are: "blood", "soul", "cardiac", and "love". In block 208, ground truth labelling is applied. For example, the output words 206 may be displayed in a graphical user interface, and the user may select which of these words to label as positive, and which as negative, with respect to the given class. In this example, the user labels the word "cardiac" as positive with respect to the given class, and the word "love" as negative with respect to the given class. In other words, the user labels the word "cardiac" as being relevant or helpful in defining the class "heart anatomy", and the word "love" as not being relevant or helpful to this end. In block 210, the training data is obtained. For example, the training data may be the words "cardiac" and "love", their respective word embeddings including word vectors, and their respective ground truth labels. This training data is input into the classifier model, as well as the vocabulary in block 214. In block 212, the classifier model is trained based on the training data, for example as described above with reference to Figure 1, and produces a classifier hyperplane. The classifier model determines supervised features for each word of the vocabulary by calculating the distance of each word of the vocabulary from the classifier hyperplane, and determines as words 216 of the give class those words 216 whose vectors have the largest (positive) distance from the classifier hyperplane. For example, the classifier model may determine as words 216 of the given class those words 216 whose probability P in equation (1) is closest to 1. In this example, there are four determined words "cardiovascular", coronary", "cardiac", "pulmonary". In block 218, the determined words are output, for example via the graphical user interface. In some examples, these words may be fed 220 back in to the ground truth labelling block 208, for the user to label one or more of the determined words, and hence for the process in blocks 210 to 218 to be repeated, thereby to further refine the set of determined words.

Referring to Figure 3, there is a diagram illustrating another example implementation of the method described with reference to Figure 1. In this example the given class is "lung comorbidities", and the user is seeking an expansive list of keywords to suitably define the class "lung comorbidities".

In block 310, example training data is shown, comprising a list of words each labelled with a respective ground truth label. For example, the words may have been obtained initially from a cosine similarity operation on the word "lung". As shown in the figure, a "+" indicates the user has labelled the word as positive with respect to the class "lung comorbidities", whereas a "-"indicates that he user has labelled the word as negative with respect to the class "lung comorbidities". As shown in the Figure, the training data examples are "cancer+", "pneumonia+", "contusion+", "effusion+", "apple-", "emphysema+", "diagnosis-", "liver-", "diagnosis-", and "lung-". This training data is used to train the classifier model 312.

In block 314, and example portion of a vocabulary is shown, comprising a list of words and their associated vectors. The vocabulary comprises pre-trained word vectors. For example, pretrained word vectors may be obtained from a suitable database. Examples of available sets of word embeddings are Word2Vec, Fasttext, and Glove word embeddings. The words and their associated vectors shown are "Cancer [0.1, 0.2,...]"; "Pneumonia [0.1, 0.3,...]", and "apple [0.2, 0.2,...]". It will be appreciated that in practice the vocabulary may have many thousands or hundreds of thousands of words and their associated vectors.

The example training data of block 310, and the vocabulary of block 314 are input into a classifier block 311. In the example, the classifier hyperplane of the classifier model is represented schematically as a line 312 on a graph. The graph is a two-dimensional plot of the multidimensional vector space. For example, the vector space may have 300 dimensions, and the graph represents a projection of that space onto two dimensions, for ease of visualisation. In this example, the vectors have been normalised, and as such the extent of each of the two axes of the plot is from -1 to +1. The vectors of the words of the vocabulary are represented as dots 313 plotted on the graph. As mentioned, the vectors have been normalised so that each have a magnitude of 1, and as such the dots 313 are distributed around the perimeter of a unit circle centred on the origin. The classifier hyperplane in this case is represented by a line 312. The classifier line 312 divides the vector space into a positive subspace (on the right-hand side of the line in the sense of Figure 3) and a negative subspace (on the left-hand side of the line 312 in the sense of Figure 3). Words with vectors in the positive subspace are predicted by the classifier model as positive words, and words on the negative sub-space are words predicted by the classifier model as negative words, with respect to the classifier. Words having vectors on the positive side of this line 312, and having large distances from this line 312, are determined as words of the given class, i.e. words likely to be relevant to defining the class.

In this example, in block 318, a list of words predicted to be relevant to defining the class is output. As shown in block 318, the predictions are listed with their associated probability P derived from (trained) equation (1). The list may include only those words with the highest values of probability P, i.e. those words with the largest distance within the positive subspace from the hyperplane 312. In this example, the list, or for example a top portion of the list, may be directly added 320 to the examples in block 310 and the process repeated iteratively. For example, the method may comprise adding words included in the predictions list 318 that are not already included in the examples list of block 310 into the examples list of block 310.

Figures 4a to 4c illustrate schematically an example of a graphical user interface (GUI) 430 according to an example. A user may use the graphical user interface as a means of inputting an input word, and/or as a means of assigning a ground truth label to an input word, for example as described above with reference to Figures 1 to 3.

The GUI 430 comprises a keyboard portion 432 and a word input field 402. A user may input a first word into the input field 402 using the keyboard portion 432. For example, following the example described above with reference to Figure 2, the user may input the word "heart" (not shown in Figure 4). The GUI 430 comprises a section 418 that lists words for which a ground truth label is to be determined. For example, the section 418 may comprises a list of words generated by a cosine similarity operation such as those generated from block 204 of the example described above with reference to Figure 2, or for example a list of determined words such as those generated from block 212 of the example described above with reference to Figure 2. The section 418 may list a predetermined number of words. In the example shown in Figure 4a, the list includes six words, namely "cardiac", "coronary", "pulmonary", "cardiovascular", "vascular", and "renal". The GUI 430 is configured so as to allow ground truth labelling of the presented words by user interaction with the GUI 430. Specifically, the GUI 430 is configured such that, if a user swipes or drags a given word to the right of the screen in the sense of Figure 4a, then the word is labelled as positive, and if the user swipes or drags a given word to the left of the screen in the sense of Figure 4a, then the word is labelled as negative. It will be appreciated that in some examples labelling actions other than swiping may be used.

As shown in Figure 4b, a user had swiped the word "renal" towards the left of the screen, and a red (colour not visible in the drawings) indicator 436 appears next to the word renal to indicate that the word has been labelled as negative. In this case, the GUI 430 may deliver training data, including the word "renal", its word vector, and the associated negative ground truth label, to the classifier model (not shown in Figures 4), and the classifier model may be trained (or retrained) based (additionally) on this training data. As a result, an updated list of determined words may be presented on the GUI 430.

As shown in Figure 4c, the word "renal" has been removed from the list of determined words, and replaced with the word "heart", (determined as a word relevant to the given class by the retraining of the classifier model). As shown in Figure 4c, a user may label the word "heart" as positive with respect to the class by swiping or dragging the word "heart" to the right of the screen in the sense of Figure 4c, and a green (colour not visible in the drawings) indicator 438 may appear next to the word "heart" to indicate that the word has been labelled as positive. Again, the GUI 430 may send accordingly updated training data to the classifier model, and the list may again be updated based on the output of the accordingly retrained classifier model. The GUI 430 may be implemented on mobile devices such as smart phones, and/or on tablet computers and personal computers. The GUI 430 may provide for a simple and efficient way of training the classifier model.

In the above examples, it is described that the classifier hyperplane is used to determine words of a given class. However, the classifier hyperplane generated as a result of training of the classifier model, for example as described above, and more particularly supervised features determined based thereon, may be used for other applications. For example, as described in more detail below, the classifier hyperplane may be used as a neuron in a larger neural network. For example, the hyperplane trained as described above may be used in text classification. For example, the hyperplane may represent a portion of the multidimensional vector space related to the given class. The supervised features for each word of the vocabulary may be used to modify the vector for each respective word, to indicate the relevance of the word to the given class. For example, the modified vector for each word may comprise a concatenation of the supervised feature for a given word with the vector of the given word. These modified vectors may themselves be used in the training of a further text classification model.

For example, a text classification model may be trained based on second training data, where the second training data comprises sets of one or more said modified vectors of words of respective training texts, each set being annotated with a second ground truth label corresponding to a classification of the training text. As mentioned, in some examples, the modified vector may comprise a concatenation of the supervised feature with the word vector. For example, the modified vector for each word may comprise a concatenation of the word vector for that word with a further dimension representing the distance, or a function of the distance, of the word vector of the given word from the hyperplane, for example the probability P for the given word from (trained) equation (1) .

For example, a text classification model may be desired which classifies different medical records according to the subjects smoking status, for example, for classification as "smoker", "previous smoker", or "never smoked", for example. A classifier model may be trained, for example as described above with respect to Figures 1 to 4, for the given class "smoker", for example. For example, words such as "smoker", "smoking", "cigar", "nicotine" may be labelled with positive ground truth labels with respect to the class "smoker", and the classifier model may me trained on this data accordingly to generate a classifier hyperplane. A supervised feature for each word of the vocabulary may then be determined based on this generated hyperplane. For example, the supervised feature may comprise a distance, or a function of the distance, of the word vector from the hyperplane, for example as described above. These supervised features may then be used to produce modified word vectors for the given words. For example, the modified vector may comprise a concatenation of the vector of the word with the supervised feature of the word. For example, the supervised features described above may be represented as a scalar (e.g. the distance from the hyperplane, or the probability P from equation (1) for a given word, are scalars), and this scalar may be added as an additional dimension to the word vector of the word. For example, if the word vector had 300 dimensions, the modified word vector may have 301 dimensions. These modified word vectors may then be used in the training of "smoker status" text classification model, for example in place of the 'original' or unmodified word vectors. In essence, the modified word vectors are "activated" towards the "smoking" class. For example, the text classification model may be trained (for example using machine learning techniques described above) based on a set of medical records each associated with a ground truth label corresponding to the known smoking status of the subject of that record. For example, the training may comprise using the modified vectors for one or more words of a given record as an input, and the ground truth label associated with the given record as a supervisory signal, in a supervised machine learning based training process.

The text classification model may thereby learn an inferred function that maps a medical record onto a smoking status. The text classification model may be used in a text analysis process to classify text (for example classify medical records for smoking status). For example, referring to Figure 5, the text analysis process may comprise, in step 542 obtaining, for each of the one or more words of the natural language text (e.g. for each word of a given medical record), the supervised feature for the word; in step 544 determining, for each of the one or more words of the natural language text, a modified vector based on the respective obtained supervised feature for the word; and in step 546 determining, based on the determined modified vectors, and using the text classification model, a classification of the text. For example, the given medical record may be classified as one of "smoker", "previous smoker", or "never smoked".

Figure 6 illustrates the effect of using the classifier hyperplane (or more specifically supervised features determined based thereon) to inform training of a text classification model as compared to not using the classifier hyperplane. Specifically, Figure 6 illustrates a plot of "F1" against number of epochs. "F1" is a standardised measure of the quality with which the classifier model can classify documents and comprises a compound measure of sensitivity and specificity. The number of epochs, or number of iterations, represents the number of training epochs or iterations during the training of the text classification model. The lower plot 770 is how F1 develops by epoch number for a "standard" text classification model in which the word vectors are not modified based on the generated hyperplane, and the upper plot 772 is how F1 develops by epoch number for the text classification model described above with reference to Figure 5, i.e. one in which modified word vectors are used that have been modified based on the supervised features generated based on the generated hyperplane. As can be seen, the upper plot reaches a higher value of F1 (i.e. a higher classification accuracy) faster than the lower plot 770, and moreover plateaus at a higher overall accuracy level than the lower plot 770. Therefore, the text classification model using the classifier hyperplane (or supervised features determined based thereon) is not only more efficient than the "standard" text classification model but is also more accurate.

As mentioned, in some examples, the modified vectors may be a concatenation of a word vector with the supervised feature. In some examples, the supervised feature may be referred to as a "supervised dimension" to be added to the vector representing the word. In some examples, there may be multiple supervised features, for example resulting from the training of different classifier hyperplanes similarly to as described above, and hence there may be multiple supervised dimensions to add to the word vector to create the modified word vector. As mentioned, in some examples, supervised features may be used in dense layers of a neural network. For example, the supervised features may be used in a dense layer of a neural network on top of an existing embedding layer of the neural network. This may allow, for example, for the neural network to be controlled based on the supervision given in the training of the hyperplane and as represented by the supervised feature. In such a way, the learning involved in the generation of the hyperplane may be transferred to a further neural network in an efficient manner. As such, efficient transfer learning may be realised.

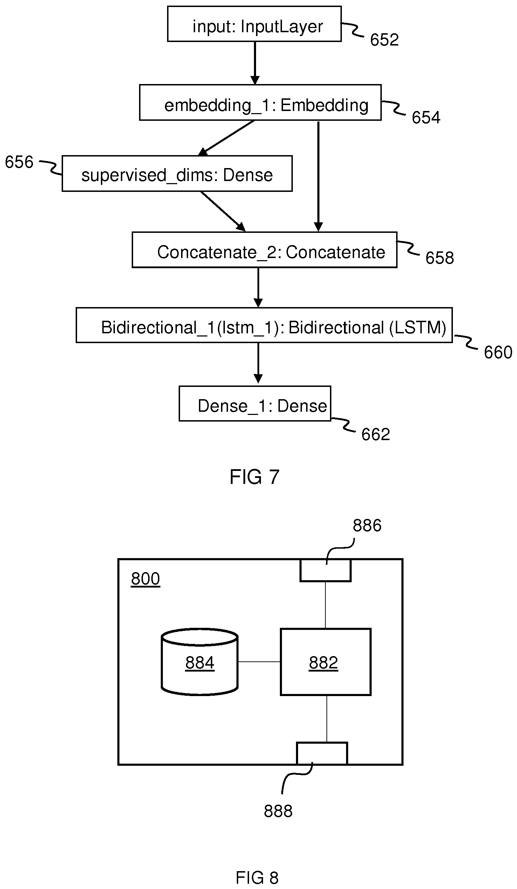

Referring to Figure 7, there is illustrated schematically an example architecture of layers of a neural network in which the supervised dimension (i.e. the supervised feature determined for each word of the vocabulary) may be applied. At the top of the layer architecture is an input layer 652. For example, the input layer 652 may represent the layer at which words are input to the neural network. Below the input layer 654 is an embedding layer 654. For example, the embedding layer may determine the word embeddings (including the word vector) for the input words passed from the input layer 652. Below the embedding layer 654 is a supervised dimensions layer 656. For example, the supervised dimensions layer 656 may provide the supervised features for each word of the vocabulary. Below the supervised dimensions layer 656 is a concatenation layer 658. For example, the concatenation layer 658 may receive the supervised features from the supervised dimensions layer 656, and the word embeddings for each word from the word embedding layer 654, and concatenate (e.g. add the beginning of one to the end of the other) the word vector from the word embedding and the supervised feature(s). This may result in the modified vector for the word. Below the concatenation layer 658 is a bi-directional LSTM neural network 660 (i.e. a Bidirectional Long Short Term Memory neural network). The concatenation layer 658 sends the modified vector to the neural network 660 and the neural network may perform a machine learning task based on this modified vector (for example as described above with reference to Figure 5). The output of the machine learning task may be sent to a dense layer 662 below the neural network 660. Although a bi-directional LSTM neural network 600 is shown, it will be appreciated that in other examples other neural networks may be used. For example, neural network 660 may comprise a Recurrent Neural Network (RNN) architecture, in which an internal memory may be used to process arbitrary sequences of inputs. For example, as mentioned, the neural network may be a Long Short-Term Memory (LSTM) based Recurrent Neural Network (RNN) architecture, for example comprising one or more LSTM cells for remembering values over arbitrary time intervals, and/or for example comprising gated recurrent units (GRU). The neural network 660 may be a convolutional neural network (CNN). Other suitable neural networks may be used.

Figure 8 illustrates schematically an example apparatus 800, by which any one or combination of the example methods described above with reference to Figures 1 to 7 may be performed or implemented. The apparatus 800 comprises a processor 882 and a memory 884. The memory 884 may store instructions which when executed by the processor 882 cause the apparatus 800 to perform the method according to any one or combination of the examples described above with reference to Figures 1 or 7. For example, the apparatus 800 may be arranged to implement any one or combination of the steps 102 to 106 of Figure 1; the word input of block 202, the cosine similarity operation of block 204, the ground truth labelling of block 208, the classifier model of block 212, and the similar words output of block 218 of Figure 2; the graphical user interface 430 of Figures 4a to 4c, any one or combination of the steps 542 to 546 of Figure 6, and/or the neural network architecture of Figure 8. The apparatus comprises an input 886 and an output 388. For example, the input 886 may be arranged to receive one or more input words and/or ground truth labels; the vocabulary, one or more medical text reports or text thereof, as described above, for example from a user interface, a database and/or transmitted from one or more other devices (not shown). The output 888 may output one or more determined words, supervised features, the modified vectors, and/or classifications of one or more text reports, as described above, for example to a storage means (not shown), for display on a user interface of the apparatus (not shown) and/or for transmission to one or more further devices (not shown). The apparatus 800, for example including the input and output 886, 888, may implement the graphical user interface 430 described above with respect to Figures 4a to 4c.

The above examples are to be understood as illustrative examples of the invention. It is to be understood that any feature described in relation to any one example may be used alone, or in combination with other features described, and may also be used in combination with one or more features of any other of the examples, or any combination of any other of the examples. Furthermore, equivalents and modifications not described above may also be employed without departing from the scope of the invention, which is defined in the accompanying claims.

**Claims**

**1.** A method of determining a supervised feature, for use in text classification, for each word of a vocabulary (214, 314), the vocabulary (214, 314) comprising a plurality of words each associated with a word embedding comprising a vector representing the word in a multidimensional space, the method comprising:

obtaining training data (210, 310), the training data (210, 310) comprising:

one or more input words;
one or more word embeddings each associated with a respective one of the input words, each word embedding comprising a vector representing the respective one of the input words in the multidimensional space; and
one or more ground truth labels, each associated with a respective one of the input words, and each indicating an association of the respective input word with a given class;

training, based on the training data, a classifier model (212, 311) thereby to generate a classifier hyperplane (312) in the multidimensional space; and
determining, based on the classifier hyperplane (312), for each word of the vocabulary (214, 314), a supervised feature for use in text classification.

2. The method according to claim 1, wherein the supervised feature for each word of the vocabulary (214, 314) represents a distance, or a function of the distance, between the vector representing the word and the classifier hyperplane (312).

3. The method according to claim 1 or claim 2, wherein the method comprises:

determining, based on the supervised feature, one or more words (216) for the given class.

4. The method according to claim 3, wherein the method comprises:

obtaining a said ground truth label, and a said word embedding, for each of the determined one or more words (216) for the given class;
updating the training data (210, 310), based on the one or more determined words (216), the obtained ground truth label for each of the one or more determined words (216), and the obtained word embedding for each of the one or more determined words (216), to include the one or more determined words (216) as input words;
retraining, based on the updated training data, the classifier model (212, 311) to produce an updated classifier hyperplane (312) in the multidimensional space;
determining, for each word of the vocabulary (214, 314), an updated supervised feature representing the distance, or function of distance, of the vector of the word embedding of the word from the updated classifier hyperplane (312); and
determining, based on the updated supervised feature, one or more further words for the given class.

5. The method according to claim 4, wherein the training data (210, 310) is updated, and the classifier model (212, 311) is retrained, each time a said ground truth label and word embedding is obtained for one of the one or more determined words (216).

6. The method according to any one of claim 3 to claim 5, wherein the method comprises determining as said determined words (216) those words of the vocabulary whose vector is in a positive subspace of the multidimensional space as defined by the classifier hyperplane (312) and has a distance, or function of distance, from the classifier hyperplane (312) more than a threshold value.

7. The method according to any one of claim 3 to claim 6, wherein the method comprises displaying the one or more determined words (216) to a user via a graphical user interface (430).

8. The method according to any one of claim 3 to claim 7, wherein the method comprises:

performing, using at least the one or more determined words (216), a keyword search on a corpus of documents thereby to obtain documents relevant to the given class.

9. The method according to any one of claim 1 to claim 8, the method further comprising:

applying a computer implemented text analysis process to natural language text to determine a classification of the text, the natural language text comprising one or more words present in the vocabulary (214, 314); wherein the computer implemented text analysis process comprises:

obtaining, for each of the one or more words of the natural language text, the supervised feature for the word; determining, for each of the one or more words of the natural language text, a modified vector based on the respective obtained supervised feature for the word; and determining, based on the determined modified vectors, and using a text classification model, a classification of the text.

10. The method according to claim 9, wherein the text classification model is a classification model having been trained based on second training data, the second training data comprising sets of one or more said modified vectors of words of respective training texts, each set being annotated with a second ground truth label corresponding to a classification of the training text.

11. The method according to any one of claim 1 to claim 10, wherein the classifier model (212, 311) comprises a logistic regression classifier model.

12. The method according to any one of claim 1 to claim 11, wherein the method comprises:

obtaining a first input word and a said word embedding associated with the first word; applying a cosine similarity operation (204) on the vector of the word embedding of the first input word with respect to the vectors of each of the word embeddings of the words of the vocabulary (214, 314) thereby to determine a plurality of second input words (206); and obtaining a said ground truth label and said word embedding for one or more of the second input words, thereby to obtain the training data (210).

13. The method according to any one of claim 1 to claim 12, wherein the method comprises normalising the vector of the word embedding of each word of the vocabulary (214, 314) prior to training the classifier model (212, 311) .

14. The method according to any one of claim 1 to claim 13, wherein obtaining a said ground truth label comprises obtaining the ground truth label via a or the graphical user interface (430).

15. An apparatus (800) comprising a processor (882) and a memory (884), the processor (882) being configured to perform the method according to any one of claim 1 to claim 14.

obtaining training data comprising input words, word embeddings and ground truth labels

102

training a classifier model to generate a classifier hyperplane based on the training data

104

determining, based on the classifier hyperplane, for each word of the vocabulary, a supervised feature for use in text classification

106

FIG 1

FIG 2

EP 3 657 354 A1

**Pretrained Word Vectors**

| Words | Vectors |
|---|---|
| Cancer | [0.1 0.2 ....] |
| Pnumonia | [0.1 0.3 ....] |
| apple | [0.2 0.2 ....] |

314

313

**Examples**

cancer+
pneumonia+
contusion+
effusion+
apple-
emphysema+
diagnosis-
Liver-
diagnosis-
lung-

Classifier
312

**Predictions**

AIDS 0.984
Pneumonia 0.983
Cancer 0.980
Hypertension 0.979
Emphysema 0.977
pneumonia 0.970
effusion 0.969
Diabetes 0.967
hypertension 0.958
emphysema 0.955
Fibrosis 0.949
metastasis 0.946
Lymphoma 0.942
Metastasis 0.940
Effusion 0.938

310        311        318

320

FIG 3

430          430          430

Word Hunter      Word Hunter      Word Hunter

GO SAVE         GO SAVE          GO SAVE

402              434

cardiac          cardiac          cardiac
coronary         coronary         heartbeat
pulmonary        pulmonary        cardiovascular
cardiovascular   cardiovascular        heart
vascular         vascular         pulse
renal                             coronary

418              436              438    418'

432

FIG 4a          FIG 4b           FIG 4c

16

obtaining, for each of the one or more words of the natural language text, the supervised feature for the word

542

determining, for each of the one or more words, a modified vector based on the obtained supervised feature

544

determining, based on the modified vectors, and using a text classification model, a classification of the text.

546

FIG 5

772

770

F1

Number of epochs

FIG 6

input: InputLayer 652

embedding_1: Embedding 654

656 supervised_dims: Dense

Concatenate_2: Concatenate 658

Bidirectional_1(lstm_1): Bidirectional (LSTM) 660

Dense_1: Dense 662

FIG 7

886

800

884 882

888

FIG 8

Europäisches
Patentamt

European
Patent Office

Office européen
des brevets

## EUROPEAN SEARCH REPORT

Application Number

EP 18 20 7795

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SETIAWAN ERWIN B ET AL: "Feature expansion using word embedding for tweet topic classification", 2016 10TH INTERNATIONAL CONFERENCE ON TELECOMMUNICATION SYSTEMS SERVICES AND APPLICATIONS (TSSA), IEEE, 6 October 2016 (2016-10-06), pages 1-5, XP033073318, DOI: 10.1109/TSSA.2016.7871085 [retrieved on 2017-03-03] * abstract * * page 1, right-hand column, line 4 - page 3, left-hand column, line 5 * * page 3, left-hand column, line 20 - page 4, right-hand column, line 31 * ----- | 1-15 | INV. G06F16/35 |
| X | THORNTON JASON ET AL: "Feedback-based social media filtering tool for improved situational awareness", 2016 IEEE SYMPOSIUM ON TECHNOLOGIES FOR HOMELAND SECURITY (HST), IEEE, 10 May 2016 (2016-05-10), pages 1-6, XP032960716, DOI: 10.1109/THS.2016.7568888 [retrieved on 2016-09-14] * abstract * * page 1, right-hand column, line 40 - page 2, left-hand column, line 17 * * page 3, left-hand column, line 1 - page 3, right-hand column, line 34 * * page 6, left-hand column, line 1 - page 6, left-hand column, line 18 * ----- -/-- | 1-15 | |

TECHNICAL FIELDS SEARCHED (IPC)

G06F

The present search report has been drawn up for all claims

| Place of search | Date of completion of the search | Examiner |
|---|---|---|
| The Hague | 30 January 2019 | Boyadzhiev, Yavor |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt
European
Patent Office
Office européen
des brevets

**EUROPEAN SEARCH REPORT**

Application Number

EP 18 20 7795

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BRADFORD HEAP ET AL: "Word Vector Enrichment of Low Frequency Words in the Bag-of-Words Model for Short Text Multi-class Classification Problems", ARXIV.ORG, CORNELL UNIVERSITY LIBRARY, 201 OLIN LIBRARY CORNELL UNIVERSITY ITHACA, NY 14853, 18 September 2017 (2017-09-18), pages 1-8, XP080816881, * abstract * * page 1, left-hand column, line 27 - page 4, left-hand column, line 10 * * page 4, right-hand column, line 1 - page 4, right-hand column, line 55 * ----- | 1-15 | |
| A | US 2005/234955 A1 (ZENG HUA-JUN [CN] ET AL) 20 October 2005 (2005-10-20) * abstract * * paragraph [0002] - paragraph [0016] * * paragraph [0021] - paragraph [0030] * ----- | 1-15 | |
| | | | TECHNICAL FIELDS SEARCHED (IPC) |

The present search report has been drawn up for all claims

| Place of search | Date of completion of the search | Examiner |
|---|---|---|
| The Hague | 30 January 2019 | Boyadzhiev, Yavor |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 18 20 7795

This annex lists the patent family members relating to the patent documents cited in the above-mentioned European search report.
The members are as contained in the European Patent Office EDP file on
The European Patent Office is in no way liable for these particulars which are merely given for the purpose of information.

30-01-2019

| Patent document cited in search report | Publication date | Patent family member(s) | Publication date |
|---|---|---|---|
| US 2005234955 A1 | 20-10-2005 | NONE | |

EPO FORM P0459

For more details about this annex : see Official Journal of the European Patent Office, No. 12/82